# EUROPEAN PATENT APPLICATION

(11) **EP 3 089 309 A1**
(43) Date of publication of application: **02.11.2016**
(21) Application number: 14875142.3
(22) Date of filing: 24.12.2014
(51) Int. Cl.: H02J 3/32, H02J 7/00

(54) **STORAGE BATTERY DEVICE, DEVICE-CONTROL APPARATUS, AND CONTROL METHOD**

(30) Priority: 24.12.2013 JP 2013266177
(71) Applicant: Kyocera Corporation, Kyoto-shi, Kyoto 612-8501 (JP)
(72) Inventor: SATAKE, Masaomi, Kyoto-shi, Kyoto 612-8501 (JP); MATSUMOTO, Hiroyuki, Kyoto-shi, Kyoto 612-8501 (JP)
(74) Representative: Schwabe - Sandmair - Marx
(86) International application number: PCT/JP2014/084197
(87) International publication number: WO 2015/098988

(57) **Abstract**

A storage battery apparatus provided in a consumer's facility comprises: a communicator configured to communicate with an external equipment control apparatus in accordance with predetermined communication protocol; and a controller configured to execute load following discharge in which discharge power is adjusted according to power consumption of a load provided in the consumer's facility. The communicator receives a set request for requesting setting the maximum discharge value of the load following discharge from the equipment control apparatus. The controller controls the discharge power of the load following discharge not to exceed the maximum discharge value based on the set request.

## Description

### TECHNICAL FIELD

The present invention relates to a storage battery apparatus for communicating in accordance with predetermined communication protocol, an equipment control apparatus, and a control method.

### BACKGROUND ART

In recent years, energy management systems (EMS) provided in consumer's power facilities and including an equipment control apparatus to control multiple pieces of equipment have attracted public attention. Communication protocol is introduced to such systems to allow equipment, which is provided by various equipment manufacturers, to be controllable by equipment control apparatuses.

In one example of such communication protocol, ECHONET Lite (registered trademark) defines an equipment class for each kind of equipment, and also defines information and control target of the equipment to each equipment class as properties. For example, a storage battery apparatus belongs to a storage battery class, and properties corresponding to the storage battery class include a capacity of the storage battery, the maximum and minimum charge power, and the like (see Non Patent Literature 1).

Meanwhile, power product suppliers (PPS) have also attracted public attention. Users (e.g., enterprises) can purchase cheaper electricity from the PPS than from typical power companies.

Power companies supply for a shortage of electric power if the actual power consumption exceeds power demand expected by the PPS (expected power demand) beyond a predetermined variation range, and the PPS pay a penalty charge to the power companies. In Japan, the predetermined variation range is, for example, about 3% of the expected power demand per unit time of 30 minutes. The penalty charge is called an imbalance charge (or beyond-a-variation-range power generation charge). Various inventions have been proposed regarding cost reduction of the PPS (e.g., see Patent Literature 1).

A possible method to suppress the imbalance charge is to discharge electricity to the maximum from a storage battery apparatus, in accordance with the power consumption of a load, using a power supply system (power storage system) including the storage battery apparatus.

This method, however, uses up the reminder of the stored electricity of the storage battery apparatus early, inhibiting the reduction of the imbalance charge after the reminder is used up.

### CITATION LIST

### NON PATENT LITERATURE

Non Patent Literature 1: "ECHONET SPECIFICATION APPENDIX Detailed Requirements for ECHONET Device Objects Release D" October 31, 2013, the Internet <http://www.echonet.gr.jp/english/spec/pdf_spec_app_d_e/SpecAppendixD_e.pdf>

### SUMMARY OF INVENTION

A storage battery apparatus according to a first aspect is provided in a consumer's facility. The storage battery apparatus comprises: a communicator configured to communicate with an external equipment control apparatus in accordance with predetermined communication protocol; and a controller configured to execute load following discharge in which discharge power is adjusted according to power consumption of a load provided in the consumer's facility. The communicator receives a set request for requesting setting the maximum discharge value of the load following discharge from the equipment control apparatus. The controller controls the discharge power of the load following discharge to less than or equal to the maximum discharge value based on the set request.

An equipment control apparatus according to a second aspect controls a storage battery apparatus, the storage battery apparatus executing load following discharge in which discharge power is adjusted in accordance with power consumption of a load provided in a consumer's facility. The equipment control apparatus comprises a communicator configured to communicate with the storage battery apparatus in accordance with predetermined communication protocol. The communicator transmits a set request to the storage battery apparatus for requesting setting of the maximum discharge value of the load following discharge.

A control method according to a third aspect is for use in a system including a storage battery apparatus provided in a consumer's facility and an equipment control apparatus for controlling the storage battery apparatus. The control method comprises: executing, by the storage battery apparatus, load following discharge in which discharge power is adjusted according to power consumption of a load provided in the consumer's facility; communicating, by the equipment control apparatus, in accordance with predetermined communication protocol to transmit a set request for requesting setting of the maximum discharge power in the load following discharge; and executing, by the storage battery apparatus, the load following discharge at discharge power less than or equal to the maximum discharge power based on the set request.

### BRIEF DESCRIPTION OF DRAWINGS

Fig. 1 is a block diagram illustrating the structure of a control system according to an embodiment.
Fig. 2 is a sequence diagram illustrating a node connection sequence according to the embodiment.
Fig. 3 is a sequence diagram illustrating an operation sequence according to the embodiment.
Fig. 4 is a flowchart illustrating an operation of an equipment control apparatus according to the embodiment.
Fig. 5 illustrates a specific example of a power consumption trend.
Fig. 6 illustrates a comparative example 1 of a load following discharge control.
Fig. 7 illustrates a comparative example 2 of the load following discharge control.
Fig. 8 illustrates a load following discharge control according to the embodiment.

### DESCRIPTION OF EMBODIMENTS

### [Overview of Embodiments]

A storage battery apparatus according to embodiments is provided in a consumer's facility. The storage battery apparatus comprises: a communicator configured to communicate with an external equipment control apparatus in accordance with predetermined communication protocol; and a controller configured to execute load following discharge in which discharge power is adjusted according to power consumption of a load provided in the consumer's facility. The communicator receives a set request for requesting setting the maximum discharge value of the load following discharge from the equipment control apparatus. The controller controls the discharge power of the load following discharge to less than or equal to the maximum discharge value based on the set request.

In the embodiments, the maximum discharge value is designated by an instantaneous power value.

In the embodiments, the communicator notifies the equipment control apparatus of the maximum discharge value in response to a request for reading from the equipment control apparatus.

In the embodiments, the communicator communicates with the equipment control apparatus in accordance with ECHONET Lite standards.

In the embodiments, the maximum discharge value is a property corresponding to an equipment class of the storage battery apparatus.

In the embodiments, the equipment control apparatus notifies the maximum discharge value when an actual power consumption of the consumer's facility needs to be controlled to fall within a predetermined variation range of an expected power demand.

An equipment control apparatus according to the embodiments controls a storage battery apparatus, the storage battery apparatus executing load following discharge in which discharge power is adjusted in accordance with power consumption of a load provided in a consumer's facility. The equipment control apparatus comprises a communicator configured to communicate with the storage battery apparatus in accordance with predetermined communication protocol. The communicator transmits a set request to the storage battery apparatus for requesting setting of the maximum discharge value of the load following discharge.

In the embodiments, the maximum discharge value is obtained when an actual power consumption of the consumer's facility needs to be controlled to fall within a predetermined variation range of an expected power demand.

In the embodiments, the maximum discharge value is designated by an instantaneous power value.

In the embodiments, the communicator obtains the maximum discharge value from the storage battery apparatus by transmitting a reading request of the maximum discharge value to the storage battery apparatus.

In the embodiments, the communicator communicates with the storage battery apparatus in accordance with ECHONET Lite standards.

In the embodiments, the maximum discharge value is a property corresponding to an equipment class of the storage battery apparatus.

A control method according to the embodiments is for use in a system including a storage battery apparatus provided in a consumer's facility and an equipment control apparatus for controlling the storage battery apparatus. The control method comprises: executing, by the storage battery apparatus, load following discharge in which discharge power is adjusted according to power consumption of a load provided in the consumer's facility; communicating, by the equipment control apparatus, in accordance with predetermined communication protocol to transmit a set request for requesting setting of the maximum discharge power in the load following discharge; and executing, by the storage battery apparatus, the load following discharge at discharge power not exceeding the maximum discharge power based on the set request.

### [Embodiment]

An embodiment will be described below.

### (System Configuration)

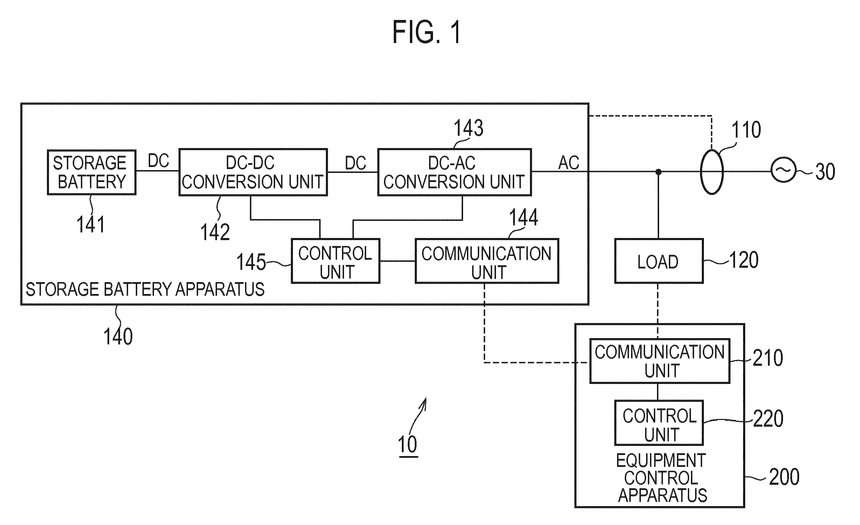

Fig. 1 is a block diagram illustrating the structure of a control system 10 according to an embodiment.

As illustrated in Fig. 1, a control system 10 is provided in a consumer's facility that receives electric power supply from a distribution line 30 (power grid). The consumer's facility receives electric power supply via the distribution line 30 from an electric power company (e.g., PPS). The control system 10 includes a sensor 110, a load 120, a storage battery apparatus 140, and an equipment control apparatus 200.

The sensor 110 measures grid power (purchasing electric power) parameters supplied from the distribution line 30 via a power line. The sensor 110 is an electric current sensor in the embodiment. The sensor 110 notifies a storage battery apparatus 140 of a measurement value via a signal line. A wired or wireless signal line may be used.

The load 120 is equipment that consumes electric power supplied from the distribution line 30 and/or the storage battery apparatus 140 via the power line. For example, the load 120 may be a refrigerator, a lighting apparatus an air conditioner, or a television. The load 120 may be a single piece of equipment or multiple pieces of equipment. The load 120 communicates with the equipment control apparatus 200 via the signal line.

The storage battery apparatus 140 is equipment for accumulating electric power. The storage battery apparatus 140 includes a storage battery 141, a direct-current-to-direct-current (DC-DC) conversion unit 142, a direct-current-to-alternate-current (DC-AC) conversion unit 143, a communication unit 144, and a control unit 145. The storage battery 141 accumulates (charges) and supplies (discharges) electric power. The storage battery 141 may accumulate grid power or may accumulate generated power generated by the power generation apparatus. In discharging the storage battery 141, the DC-DC conversion unit 142 boosts the DC power having been output from the storage battery 141, and outputs the boosted DC power to the DC-AC conversion unit 143. The DC-AC conversion unit 143 converts the DC power output from the DC-DC conversion unit 142 to the AC power, and outputs the AC power via the power line.

The communication unit 144 communicates with the equipment control apparatus 200 via the signal line in accordance with predetermined communication protocol. The control unit 145 controls the DC-DC conversion unit 142 and the DC-AC conversion unit 143 based on the communication. The control unit 145 controls discharging based on the measurement value of the sensor 110, preventing reverse power flow of the discharge power to the distribution line 30. In doing this, the discharge power is made to increase or decrease according to the power consumption of the load 120. This is called a load following discharge.

The equipment control apparatus 200 controls multiple pieces of equipment installed in the consumer's facility. The equipment control apparatus 200 is, for example, a home energy management system (HEMS) for controlling multiple pieces of equipment installed in a house. Alternatively, the equipment control apparatus 200 may also be a cluster/community energy management system (CEMS), a building energy management system (BEMS), a factory energy management system (FEMS), or a store energy management system (SEMS).

The equipment control apparatus 200 includes a communication unit 210 and a control unit 220. The communication unit 210 communicates with the load 120 and the storage battery apparatus 140 via the signal line in accordance with predetermined communication protocol. The control unit 220 controls the load 120 and the storage battery apparatus 140 through the communication unit 210.

### (Communication Protocol)

The ECHONET. Lite (registered trademark) is described below as an example of the predetermined communication protocol of the embodiment.

A protocol stack of the equipment (also referred to as nodes) in accordance with the ECHONET Lite is divided into three parts including a lower communication layer, communication middleware, and application software. In an OSI reference model, the lower communication layer corresponds to first to fourth layers, the communication middleware corresponds to fifth and sixth layers, and the application software corresponds to a seventh layer. The ECHONET Lite defines specifications of the communication middleware, but does not define specifications of the lower communication layer. In the embodiment, the communication unit 144 of the storage battery apparatus 140 and the communication unit 210 of the equipment control apparatus 200 individually execute the lower communication layer function and the communication middleware function. The control unit 145 of the storage battery apparatus 140 and the control unit 220 of the equipment control apparatus 200 individually execute the application software function.

The ECHONET Lite also defines equipment classes for each kind of equipment (also referred to as "equipment objects"), so as to define parameters of the equipment as properties of the equipment for each equipment class. The storage battery apparatus 140 belongs to a "storage battery class". The properties corresponding to the storage battery class include a capacity of the storage battery, the maximum and minimum power charging values, and the like.

The communication unit 144 of the storage battery apparatus 140 manages each property of the storage battery apparatus 140 (storage battery class). Such information managed for each equipment class is referred to as an "instance". The communication unit 144 of the storage battery apparatus 140 also manages attribute information of the storage battery apparatus 140 (e.g., a manufacturer code, an item code, or a production serial number) as "node profiles (profile objects)".

The communication middleware transmits and receives messages including, for example, "a transmitting object identification code", "a destination object identification code", "a service identification code", "a property identification code", and "a property value". The transmitting object identification code is information for identifying a transmitting object. The destination object identification code is information for identifying a destination object (or equipment class identification code). The service identification code is information for identifying operation content relative to property values. The service identification code is, for example, a "Set" which is a request for setting the property value, or a "Get" which is a request for reading the property value. The property identification code is information for identifying properties.

### (Node Connection Sequence)

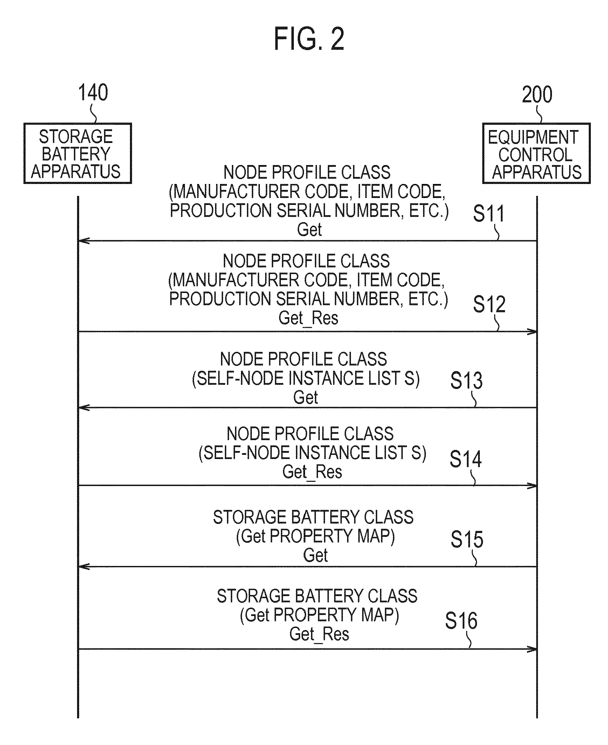

Fig. 2 is a sequence diagram illustrating a node connection sequence according to the embodiment. The node connection sequence starts when, for example, the equipment control apparatus 200 is started. Messages illustrated in Fig. 2 are transmitted and received by the communication unit 144 of the storage battery apparatus 140 and the communication unit 210 of the equipment control apparatus 200.

As illustrated in Fig. 2, the equipment control apparatus 200 transmits in step S11 a read request (hereinafter referred to as a "Get message") for requesting reading of main node profiles (e.g., the manufacture code, the item code, the production serial number) to the storage battery apparatus 140.

In step S12, the storage battery apparatus 140 responds to the receipt of the Get message and transmits a reading response (hereinafter referred to as a "Get Res message") for notifying the main node profiles to the equipment control apparatus 200. The equipment control apparatus 200 thus obtains the main node profiles from the Get Res message and detects nodes.

In step S13, the equipment control apparatus 200 sends the Get message to the detected node (the storage battery apparatus 140) to request reading of an instance list, which is a list of instances managed by the node.

In step S14, the storage battery apparatus 140 responds to the receipt of the Get message, and transmits the Get Res message for notifying the instance list of the node to the equipment control apparatus 200. The instance list includes instances of the storage battery class. In other words, the storage battery apparatus 140 notifies the equipment class of the storage battery apparatus 140 to the equipment control apparatus 200. Accordingly, the equipment control apparatus 200 learns that the detected node (the storage battery apparatus 140) manages the instances of the storage battery class.

In step S15, the equipment control apparatus 200 transmits the Get message to the storage battery apparatus 140 to request reading of a property map of the instances of the storage battery apparatus. The property map is a list of properties included in the instances.

In step S16, the storage battery apparatus 140 responds to the reception of the Get message, and transmits the Get Res message to the equipment control apparatus 200, notifying the property map of the instances of the storage battery class. The equipment control apparatus 200 obtains the property map of the instances of the storage battery class from the Get Res message. Examples of the properties included in the instances of the storage battery class (hereinafter referred to as the properties corresponding to the storage battery class) include an operation state, an operation mode setting, a measurement value of instantaneous charge/discharge power, a remaining capacity of the storage battery, and a type of the storage battery.

### (Operation According to Embodiments)

The equipment control apparatus 200 learns the properties included in the instances managed by the storage battery apparatus 140 upon completion of the node connection sequence described above, and enters a state in which the equipment control apparatus 200 can control the storage battery apparatus 140. The properties corresponding to the storage battery class of the embodiment include the maximum discharge value of the load following discharge. The maximum discharge value is designated from an instantaneous electric power value (W).

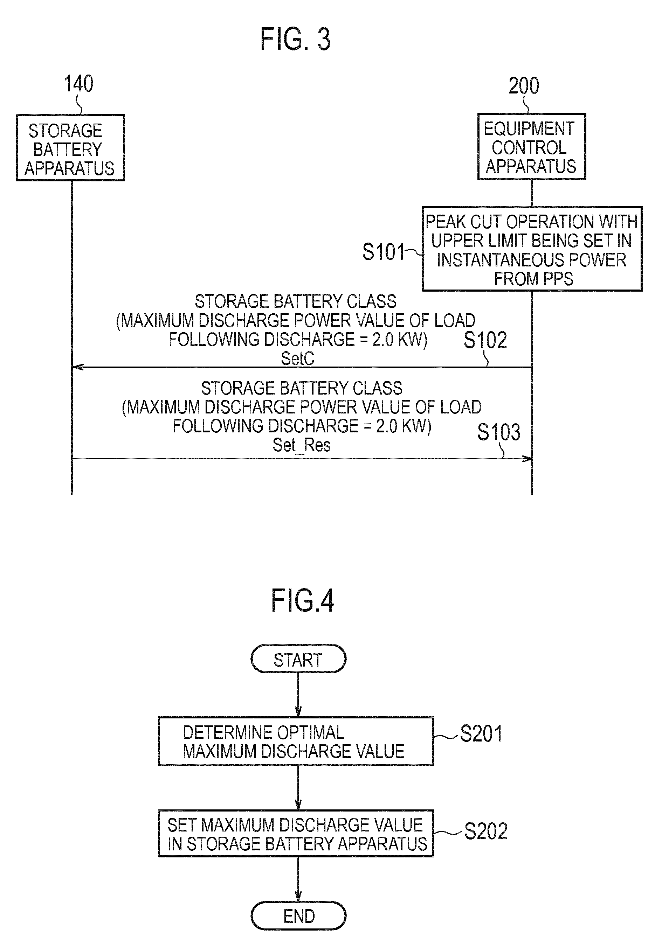

Fig. 3 is a sequence diagram illustrating an operation sequence according to the embodiment.

As illustrated in Fig. 3, in step S101, the control unit 220 of the equipment control apparatus 200 obtains the maximum discharge value of the load following discharge. The maximum discharge value of the load following discharge is smaller than a rated output value of the storage battery apparatus 140. The control unit 220 obtains the maximum discharge value of the load following discharge. The equipment control apparatus 200 (control unit 220) obtains this value via the Internet from a server apparatus possessed by a manufacturer of the storage battery apparatus 140. Alternatively, the control unit 220 may calculate the maximum discharge value of the load following discharge according to a prediction based on the past statistical data. It is assumed herein that the maximum discharge value of the load following discharge is 2.0 kW.

In step S102, the communication unit 210 of the equipment control apparatus 200 transmits a set request, which requests setting of the maximum discharge value of the load following discharge, to the storage battery apparatus 140. The maximum discharge value of the load following discharge is a property corresponding to the storage battery class. The set request is a message that includes the object identification code of the equipment control apparatus 200 as the "transmitting object identification code", the object identification code of the storage battery apparatus 140 as the "destination object identification code", the "service identification code", such as Set, the identification code of the property as the "property identification code", and the property value of the property as the "property value". The message will be referred to as a "Set message" hereinafter. The Set message includes a "SetC message" that demands a response, and a "SetI message" that does not demand a response. The SetC message is described below as an example of the Set message.

It is assumed herein that the equipment control apparatus 200 has previously set the load following discharge mode in the storage battery apparatus 140. The equipment control apparatus 200 may transmit the set request to the storage battery apparatus 140, if the load following discharge mode has not been set previously, for requesting setting of the load following discharge mode as the operation mode setting (or the discharge mode setting) of the storage battery apparatus 140, as well as the set request of the maximum discharge value of the load following discharge.

The communication unit 151 of the storage battery apparatus 140 receives the SetC message from the equipment control apparatus 200. The control unit 152 of the storage battery apparatus 140 controls the discharge power of the load following discharge not to exceed the maximum discharge value (2.0 kW) based on the SetC message. The control unit 152, for example, monitors the output of the DC-AC conversion unit 143 in a manner that the output of the DC-AC conversion unit 143 does not exceed the maximum discharge value (2.0 kW).

In step S103, the communication unit 151 of the storage battery apparatus 140 transmits the Set Res message that notifies that the maximum discharge value of the load following discharge is set to the equipment control apparatus 200.

As a result of setting the maximum discharge value of the load following discharge in the storage battery apparatus 140 by the equipment control apparatus 200, the storage battery apparatus 140 is prevented from being discharged up to the rated output, prolonging the remaining capacity of the storage battery apparatus 140.

Fig. 4 is a flowchart illustrating an operation of an equipment control apparatus 200 according to the embodiment. It is assumed that the consumer's facility is a shop.

As illustrated in Fig. 4, in step S201, the control unit 220 of the equipment control apparatus 200 previously stores data, such as a date, an external temperature, the number of guests, a power consumption trend (kW), and power consumption (kWh) for every 30 minutes. The control unit 220 searches past data under conditions of the target day to be predicted to find the past power consumption with conditions closest to the conditions of the target day. The past power consumption is regarded as the expected power demand. The control unit 220 then determines an instantaneous predicted power demand (kW), assuming that the average power consumption in the unit of 30 is used. At this time, a difference from the power consumption trend is obtained to determine the maximum discharge value of the load following discharge.

An example of determining the maximum discharge value of the load following discharge is described for a target time period of 30 minutes between 12:00 to 12:30 p.m. of November 18, 2013. It is assumed that a predicted temperature is 19°C and the number of predicted guests is 100 in the target time. It is also assumed that the past data of November 12, 2012 satisfies the above conditions with the outside temperature of 19°C and the number of guests of 95. In this case, if the power consumption between 12:00 to 12:30 p.m. of November 12, 2012 is 5 kWh, an average predicted power demand is 10 kW (10 kW = 5 kWh/0.5 h). When the power consumption trend exceeds 10 kW for 10 minutes between 12:00 to 12:30 p.m. of November 12, 2012, and the average power consumption is 2.1 kW, the maximum discharge value is determined to 2.1 kW.

In step S202, the communication unit 210 of the equipment control apparatus 200 transmits the Set message to the storage battery apparatus 140 for requesting setting of the determined maximum discharge amount of the load following discharge.

As described above, the control unit 152 of the storage battery apparatus 140 controls the discharge power of the load following discharge not to exceed the maximum discharge value (2.0 kW) based on the set request (e.g., the SetC message). Accordingly, the discharge volume of the storage battery apparatus 140 does not become too large, and the actual power consumption can be easily suppressed to fall within a predetermined variation range for a predetermined time period (e.g., 30 minutes). In other words, the time taken for the remaining capacity to become zero increases, while the imbalance charge is suppressed as a result of preventing unnecessary discharge.

### (Specific Examples)

Specific examples of the power consumption trend are described below by referring to comparative examples of the load following discharge control according to the embodiment.

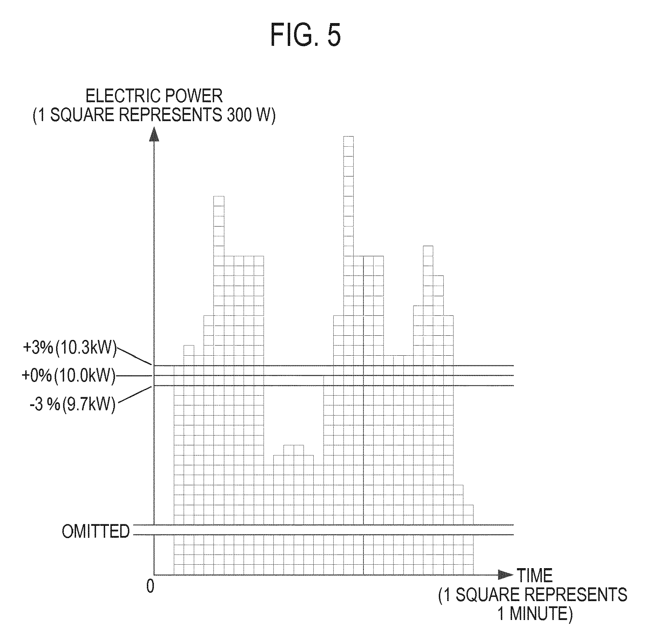

Fig. 5 specifically illustrates an example of the power consumption trend. It is assumed that the predicted demand power for 30 minutes is 5 kWh. In this case, as illustrated in Fig. 5, the instantaneous target power is 10 kW (0%), and the variation range of the power volume allowable for 30 minutes is between 9.7 kW (-3%) to 10.3 kW (+3%). In Fig. 5, the actual power consumption changes as indicated in the graph, generating an excess of 930 Wh and a shortage of 360 Wh in 30 minutes, providing a total excess power of 570 Wh. The power consumption for 30 minutes is 10.57 kWh. An imbalance charge for 0.27 kWh is generated accordingly.

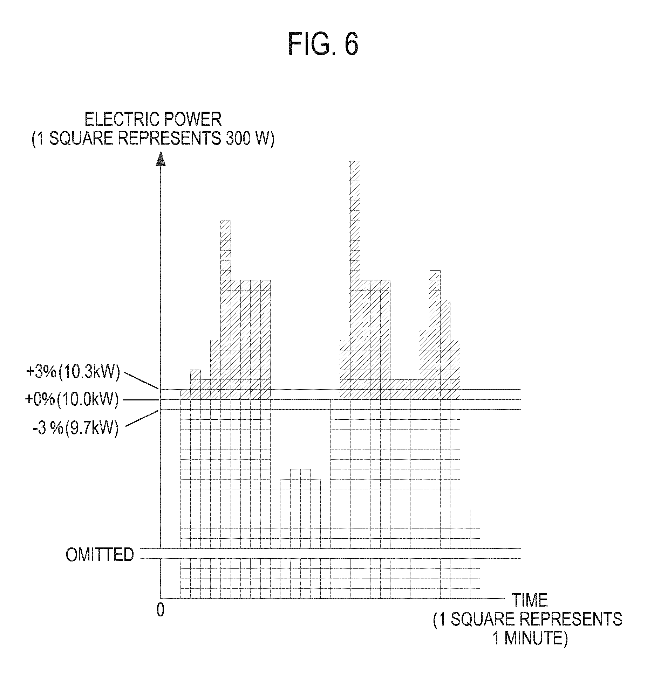

Fig. 6 illustrates a comparative example 1 of the load following discharge control. As illustrated in Fig. 6, the storage battery apparatus 140 is controlled to discharge power when the target power exceeds 10 kW in the comparative example 1. In Fig. 6, the excess of 930 Wh is covered by the discharge of the storage battery apparatus 140, but a shortage of 360 Wh remains. The power consumption of the grid power for 30 minutes is 9.64 kWh. An imbalance charge for 0.06 kWh is generated accordingly.

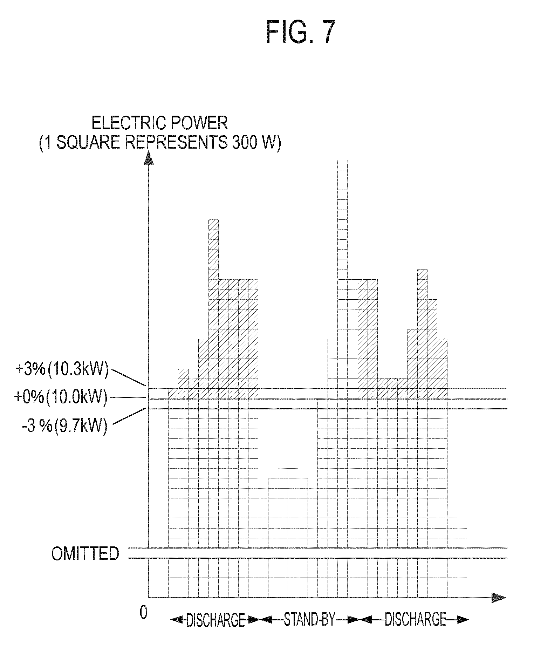

Fig. 7 illustrates a comparative example 2 of the load following discharge control. As illustrated in Fig. 7, the comparative example 2 continuously monitors the electric power, and controls the discharge in a time division manner so as to bring the electric power to 0 kWh. Specifically, the temporary discharge is suspended to attain a total electricity power of 0 kWh next time the electric power becomes in excess, because the power consumption of the grid power has been insufficient after the discharge of the excess of electric power. The discharge resumes when the electricity amount exceeds 0 kWh. In this case, the power consumption of 0.15 kWh of the grid power is in short for 30 minutes, but no imbalance charge is generated. However, the power consumption of the grid power becoming in short indicates that the discharge continues unnecessarily. If such a condition illustrated in Fig. 7 repeats, with the storage battery capacity of 12 kWh and a DOD of 80%, the remaining capacity of the storage battery reaches 0% in 13.3 hours.

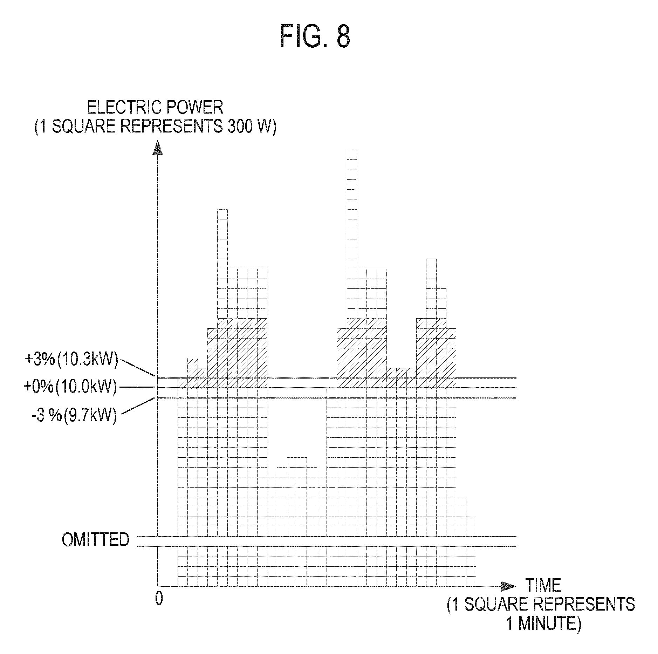

Fig. 8 illustrates a load following discharge control according to the embodiment. It is assumed herein that the maximum discharge value of the load following discharge is 2.1 kW. As illustrated in Fig. 8, the discharge volume (kWh) is suppressed to be smaller than that of the comparative example 2, because the maximum discharge volume is only 2.1 kW when the power consumption exceeds 10 kW (0%). As a result of suppressing the discharge amount (kW) to be smaller than that of the comparative example 2, the discharge volume can be controlled to be 0 kWh (0%). Thus, the discharge volume can be kept at the minimum necessary value. If such a condition illustrated in Fig. 8 is repeated, with the storage battery capacity of 12 kWh and a DOD of 80%, the remaining capacity of the storage battery reaches 0% in 16.84 hours. Thus, the dischargeable time period becomes at least 3 hours longer than the comparative example 2, leading to minimizing of the imbalance charge.

### [Other Embodiments]

The equipment control apparatus 200 may transmit the Get message to the storage battery apparatus 140, requesting reading of the maximum discharge value, as the property corresponding to the storage battery class, of the load following discharge of the storage battery apparatus 140. The storage battery apparatus 140 may also transmit the Get Res message to the equipment control apparatus 200, notifying the maximum discharge value of the load following discharge in response to the receipt of the Get message.

The embodiment described above has been described as an example of the system in accordance with the ECHONET Lite. The system, however, may not be in accordance with the ECHONET Lite, and the resent invention may be adapted to the system in accordance with other types of communication protocol, such as ZigBee (registered trademark) or KNX.

The entire contents of Japanese Application No. 2013-266177 (filed on December 24, 2013) have been incorporated into this disclosure by reference.

### INDUSTRIAL APPLICABILITY

The embodiments provide a storage battery apparatus, an equipment control apparatus, and a control method capable of controlling discharge efficiently.

## Claims

1. A storage battery apparatus provided in a consumer's facility, comprising:
a communicator configured to communicate with an external equipment control apparatus in accordance with predetermined communication protocol; and
a controller configured to execute load following discharge in which discharge power is adjusted according to power consumption of a load provided in the consumer's facility, wherein
the communicator receives a set request for requesting setting a maximum discharge value of the load following discharge from the equipment control apparatus, and
the controller controls the discharge power of the load following discharge to less than or equal to the maximum discharge value based on the set request.

2. The storage battery apparatus according to claim 1, wherein
the maximum discharge value is designated by an instantaneous power value.

3. The storage battery apparatus according to claim 1 or 2, wherein
the communicator notifies the equipment control apparatus of the maximum discharge value in response to a request for reading from the equipment control apparatus.

4. The storage battery apparatus according to any one of claims 1 to 3, wherein
the communicator communicates with the equipment control apparatus in accordance with ECHONET Lite standards.

5. The storage battery apparatus according to claim 4, wherein
the maximum discharge value is a property corresponding to an equipment class of the storage battery apparatus.

6. The storage battery apparatus according to any one of claims 1 to 5, wherein
the equipment control apparatus notifies the maximum discharge value when an actual power consumption of the consumer's facility needs to be controlled to fall within a predetermined variation range of an expected power demand.

7. An equipment control apparatus that controls a storage battery apparatus, the storage battery apparatus executing load following discharge in which discharge power is adjusted in accordance with power consumption of a load provided in a consumer's facility, the equipment control apparatus comprising:
a communicator configured to communicate with the storage battery apparatus in accordance with predetermined communication protocol, wherein
the communicator transmits a set request to the storage battery apparatus for requesting setting of the maximum discharge value of the load following discharge.

8. The equipment control apparatus according to claim 7, wherein
the maximum discharge value is obtained when an actual power consumption of the consumer's facility needs to be controlled to fall within a predetermined variation range of an expected power demand.

9. The equipment control apparatus according to claim 7 or 8, wherein
the maximum discharge value is designated by an instantaneous power value.

10. The equipment control apparatus according to any one of claims 7 to 9, wherein
the communicator obtains the maximum discharge value from the storage battery apparatus by transmitting a reading request of the maximum discharge value to the storage battery apparatus.

11. The storage battery apparatus according to any one of claims 7 to 10, wherein
the communicator communicates with the storage battery apparatus in accordance with ECHONET Lite standards.

12. The equipment control apparatus according to claim 11, wherein
the maximum discharge value is a property corresponding to an equipment class of the storage battery apparatus.

13. A control method for use in a system including a storage battery apparatus provided in a consumer's facility and an equipment control apparatus for controlling the storage battery apparatus, the control method comprising:
executing, by the storage battery apparatus, load following discharge in which discharge power is adjusted according to power consumption of a load provided in the consumer's facility;
communicating, by the equipment control apparatus, in accordance with predetermined communication protocol to transmit a set request for requesting setting of the maximum discharge power in the load following discharge; and
executing, by the storage battery apparatus, the load following discharge at discharge power less than or equal to the maximum discharge power based on the set request.
